# FASCICULE DE BREVET EUROPEEN

(11) **EP 3 392 697 B1**
(45) Date de publication et mention de la délivrance du brevet: **31.03.2021**
(21) Numéro de dépôt: 18167842.6
(22) Date de dépôt: 17.04.2018
(51) Int. Cl.: G02B 26/08

(54) **MIROIR DEFORMABLE A COURBURE VARIABLE ET PROCEDE DE FABRICATION D'UN MIROIR ASSOCIE**
VERFORMBARER SPIEGEL MIT VARIABLER KRÜMMUNG, UND ENTSPRECHENDES HERSTELLUNGSVERFAHREN EINES SPIEGELS
DEFORMABLE MIRROR WITH VARIABLE CURVATURE AND ASSOCIATED METHOD OF MANUFACTURING A MIRROR

(30) Priorité: 20.04.2017 FR 1753440
(43) Date de publication de la demande: 24.10.2018
(73) Titulaire: ALPAO, 38330 Montbonnot-Saint-Martin (FR)
(72) Inventeur: CHARTON, Julien, Gérard, Ernest, 38190 BRIGNOUD (FR)
(74) Mandataire: Weber, Jean-François

(56) Documents cités:
- DE-A1- 2 506 905
- US-A- 4 033 676

## Description

La présente invention concerne le domaine général des miroirs déformables utilisés dans les systèmes optiques adaptatifs, pour des applications aussi diverses que l'astronomie, la médecine, notamment l'ophtalmologie, l'utilisation de lasers, la microscopie, la microélectronique, etc.

La présente invention se rapporte plus particulièrement à un miroir déformable comportant d'une part une plaque possédant une face réfléchissante et une face cachée opposée et dont la forme présente un centre et des rayons, et d'autre part au moins un actionneur destiné à exercer une force sur ladite face cachée pour déformer ladite plaque.

La présente invention concerne également un procédé de fabrication d'un tel miroir.

Il est connu d'employer des miroirs déformables afin de simuler ou de corriger des aberrations optiques, c'est-à-dire des irrégularités du front d'onde d'un faisceau lumineux produisant par exemple un astigmatisme, en générant par exemple des concavités ou des convexités à la surface d'un tel miroir, notamment circulaire.

De tels miroirs comprennent une plaque souple comportant une face réfléchissante et une face cachée opposée, ladite face cachée étant reliée à plusieurs actionneurs destinés à manoeuvrer localement ladite plaque en avance ou en retrait, et ainsi modifier le chemin optique parcouru par les différents rayons constituant le faisceau lumineux se réfléchissant sur la face réfléchissante de ladite plaque. Il est ainsi possible de composer les déphasages à l'origine de la déformation du front d'onde.

Cependant, de tels miroirs connus présentent l'inconvénient de nécessiter un grand nombre d'actionneurs, rendant de tels miroirs complexes à installer, et ce même pour réaliser une déformation simple desdits miroirs comme la génération d'une courbure concave ou convexe, et entraînant un coût de fabrication important ainsi qu'une certaine fragilité, le dysfonctionnement d'un seul actionneur pouvant entrainer un défaut de déformation de ladite plaque déformable. De plus, les liaisons desdits nombreux actionneurs avec ladite face cachée sont relativement complexes à réaliser et présentent une durée de vie limitée, augmentant encore les coûts, et entraînant des périodes d'immobilisation importantes pour réparer ces liaisons. Lesdites périodes d'immobilisation sont encore aggravées par le temps passé à changer un des multiples actionneurs qui tombe hors-service.

Il est également connu d'utiliser des systèmes optiques comprenant un miroir déformable circulaire et un seul actionneur qui est de type aspiration/compression, à l'aide d'un fluide en contact avec une face cachée du miroir, ou mécanique, à l'aide d'une vis en contact avec ladite face cachée. Un tel miroir comprend une plaque déformable circulaire présentant un profil d'épaisseur particulier, ladite épaisseur diminuant du centre dudit miroir à sa périphérie de façon continue et axialement symétrique, selon une ou plusieurs formules mathématiques comprenant des facteurs tels que : le type d'actionneur et d'appui du miroir, le rayon dudit miroir circulaire, etc.

Cependant, une telle configuration est difficile et complexe à mettre en œuvre, ce type de système restant difficile à réaliser avec précision, en particulier ledit profil d'épaisseur particulier de ladite plaque. En effet, ladite formule mathématique dont celui-ci dépend est extrêmement complexe et comporte de nombreux facteurs, dont le type d'actionneur et la configuration générale d'appui, ainsi que le rayon dudit miroir circulaire, ce qui augmente le risque d'erreur lors de la fabrication d'un tel miroir. Il est difficile et coûteux de réaliser un miroir présentant ce profil d'épaisseur de plaque particulier selon une formule mathématique aussi spécifique, en réduisant l'épaisseur de ladite plaque de façon précise selon le rayon dudit miroir circulaire. Enfin, de tels systèmes optiques sont coûteux à réaliser, d'une part en raison du procédé de réalisation dudit profil d'épaisseur, et d'autre part en raison du taux de rebut des miroirs dont le profil d'épaisseur ne correspond pas tout à fait à la formule mathématique, les applications des miroirs déformables demandant généralement une grande précision de réalisation.

Il est également connu d'utiliser des systèmes optiques comprenant une plaque déformable circulaire et un seul actionneur mécanique destiné à tirer ou pousser ladite plaque en son centre pour la déformer, ladite plaque présentant une épaisseur qui diminue de son centre vers son bord circulaire de façon axialement symétrique, échelonnée, et discontinue, à l'image des marches d'un escalier.

Cependant, une telle configuration est difficile et complexe à mettre en œuvre pour les mêmes raisons que celles précédemment citées. En effet, lesdites marches, taillées dans l'épaisseur de ladite plaque, sont difficiles et coûteuse à réaliser, augmentant le taux de rebuts des miroirs dont une des marches n'a pas été réalisée précisément, par exemple une marche trop large ou trop épaisse.

Le document antérieur US-4,033,676 décrit un appareil réflecteur formé par pression permettant de collecter et de concentrer des radiations électromagnétiques.

Le document antérieur DE-2506905 décrit un ensemble de miroir parabolique pour générer de l'énergie à partir de la lumière du soleil.

Les objets assignés à l'invention visent par conséquent à remédier aux différents inconvénients susmentionnés et à proposer un nouveau miroir déformable fiable, compact, et dont la fabrication est peu coûteuse et peu complexe.

Un autre objet assigné à l'invention vise à proposer un nouveau miroir déformable de structure simple et robuste.

Un autre objet assigné à l'invention vise à proposer un nouveau miroir déformable dont la mise en place au sein d'un système optique est facile, rapide et bon marché.

Un autre objet assigné à l'invention vise à proposer un nouveau miroir déformable capable de focaliser ou de défocaliser un faisceau optique de façon précise et rapide.

Un autre objet assigné à l'invention vise à proposer un nouveau miroir déformable facilement adaptable selon l'introduction ou à la correction de l'aberration optique que l'on cherche à obtenir.

Un autre objet assigné à l'invention vise à proposer un nouveau miroir déformable particulièrement adapté pour générer une courbure telle qu'une concavité ou une convexité.

Enfin, un objet assigné à l'invention vise à proposer un nouveau miroir déformable qui ne nécessite qu'un nombre limité d'actionneur(s) pour être mis en œuvre au sein d'un système optique.

Les objets assignés à l'invention sont atteints à l'aide d'un miroir déformable comportant d'une part une plaque possédant une face réfléchissante et une face cachée opposée et dont la forme présente un centre et des rayons, et d'autre part au moins un actionneur destiné à exercer une force sur ladite face cachée pour déformer ladite plaque, caractérisé en ce que ladite plaque comprend une pluralité de portions primaires et secondaires, lesdites portions secondaires étant interposées entre lesdites portions primaires, chacune desdites portions primaires s'étendant sensiblement localement le long et de part et d'autre d'un rayon respectif parmi lesdits rayons et présentant une raideur différente de celle(s) desdites portions secondaires qui lui sont adjacentes, ladite plaque présentant une tenue mécanique propre.

Les objets assignés à l'invention sont également atteints à l'aide d'un procédé de fabrication d'un miroir déformable, caractérisé en ce qu'il comporte :
- d'une part, au moins une étape de réalisation d'une plaque possédant une face réfléchissante et une face cachée opposée et dont la forme présente un centre et des rayons, ladite plaque comprenant une pluralité de portions primaires et secondaires, lesdites portions secondaires étant interposées entre lesdites portions primaires, chacune desdites portions primaires s'étendant sensiblement localement le long et de part et d'autre d'un rayon respectif parmi lesdits rayons et présentant une raideur différente de celle(s) desdites portions secondaires qui lui sont adjacentes, ladite plaque présentant une tenue mécanique propre, et
- d'autre part, au moins une étape de mise en place d'au moins un actionneur destiné à exercer une force sur ladite face cachée pour déformer ladite plaque.

D'autres particularités et avantages de l'invention apparaîtront et ressortiront plus en détail à la lecture de la description faite ci-après, en référence aux dessins annexés, donnés uniquement à titre d'exemples illustratifs et non limitatifs, dans lesquels :
- La figure 1 illustre, selon une vue en perspective, un miroir déformable selon un premier mode de réalisation de l'invention, ledit miroir étant vu du côté de sa face cachée.
- La figure 2 illustre, selon une vue de face, la face cachée d'un miroir déformable selon un deuxième mode de réalisation de l'invention, avec une seule portion primaire représentée.
- La figure 3 illustre, la face cachée d'un miroir déformable selon un troisième mode de réalisation de l'invention, avec une seule portion primaire représentée.
- La figure 4 illustre, selon une vue de face, la face cachée d'un miroir déformable selon un quatrième mode de réalisation de l'invention.
- La figure 5 illustre, selon une vue de face, la face cachée d'un miroir déformable selon un cinquième mode de réalisation de l'invention, avec une seule portion primaire représentée.

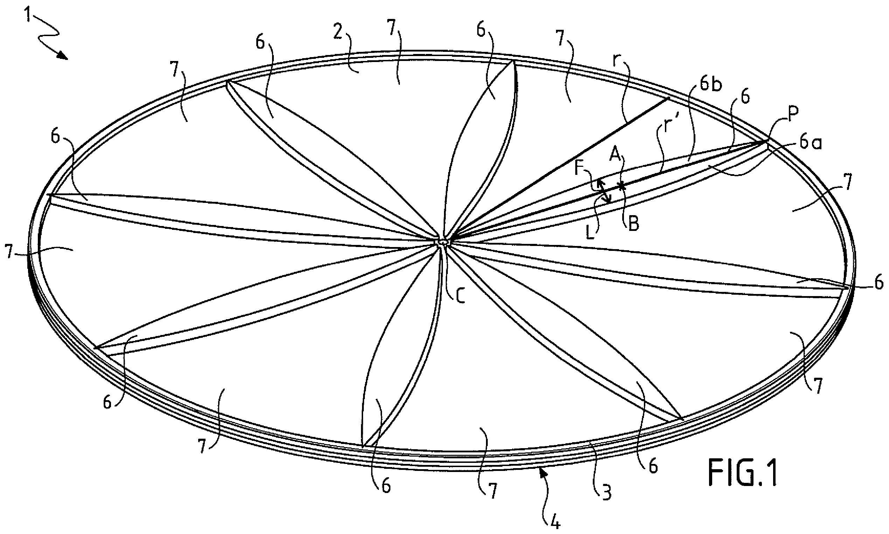

L'invention concerne, selon un premier aspect, illustré aux figures 1 à 5, un miroir déformable 1.

Le miroir 1 est en particulier destiné à être utilisé dans un système nécessitant l'emploi d'optique adaptative, par exemple un système d'observation astronomique ou un système d'imagerie ophtalmologique. En particulier, le miroir 1 est destiné à introduire ou corriger une aberration optique dans un faisceau lumineux.

Selon la présente invention, et comme représenté à la figure 1, le miroir 1 comporte une plaque 2 possédant une face réfléchissante 4 et une face cachée 5 opposée. De préférence, ladite face réfléchissante 4 est localement parallèle à ladite face cachée 5, lesdites faces réfléchissante 4 et cachée 5 se trouvant sur des faces opposées l'une à l'autre de ladite plaque 2.

Avantageusement, en l'absence d'influence extérieure, ladite plaque 2 est de forme générale sensiblement plane, ou légèrement bombée, c'est-à-dire convexe (ou légèrement concave, selon le point de vue), et comporte de préférence au moins un bord 3 fini. Ladite convexité (ou concavité, selon le point de vue) de ladite plaque 2 est de préférence suffisamment faible, c'est-à-dire présentant un rayon de courbure relativement important par rapport aux dimensions de ladite plaque 2, pour que la surface de ladite plaque 2 bombée soit assimilée, localement (c'est-à-dire sur une fraction de l'aire de ladite plaque 2), à une surface plane.

Préférentiellement, en l'absence et/ou en présence d'influence extérieure, ladite plaque 2 présente une forme générale sensiblement plane ou légèrement bombée, avec éventuellement une convexité ou concavité suffisamment faible pour être non visible ou à peine perceptible à l'œil nu, ladite convexité ou concavité de la plaque 2 étant par exemple bien trop réduite pour que la plaque 2 forme une portion significative d'une sphère, comme par exemple une moitié, un tiers, un quart ou un cinquième ou plus d'une sphère. En tout état de cause, la convexité ou concavité de la plaque 2 ne délimite de préférence pas un espace intérieur significatif.

Ladite plaque 2 est fabriquée à partir d'un matériau relativement souple, mais possédant tout de même une certaine tenue mécanique, de sorte qu'elle ne se déforme que peu ou pas du tout tant qu'elle n'est pas soumise à un minimum de pression ou de traction extérieure. Ladite plaque 2 présente donc une tenue mécanique propre, n'est pas flasque, et présente cependant une souplesse et une flexibilité suffisantes pour subir une légère déformation élastique, c'est-à-dire réversible, en particulier lorsqu'elle est sollicitée en flexion.

Avantageusement, ladite plaque 2 est une plaque mince, déformable, qui se déforme en particulier sous l'action d'une force externe exercée à sa surface, notamment une force exercée par un actionneur.

De façon avantageuse, la plaque 2 présente une épaisseur moyenne inférieure ou égale à 50 µm, de préférence inférieure ou égale à 10 µm, voire sensiblement comprise entre 3 µm et 5 µm. De manière préférentielle, la plaque 2, pour la fonction visée par l'invention, présente une taille relativement modeste, et présente par exemple un diamètre inférieur ou égal à 30 mm, de préférence inférieure ou égal à 20 mm, plus préférentiellement encore inférieur ou égal à 15 mm.

Préférentiellement, ladite plaque 2 est principalement réalisée en silicium, en métal (par exemple en acier ou en aluminium), en alliage, en polymère(s), en matériau(x) composite(s), en céramique(s), ou en un assemblage de plusieurs matériaux différents, notamment parmi les matériaux susmentionnés.

Avantageusement, ladite plaque 2, lorsqu'elle est soumise à une pression ou une traction extérieure, par exemple une pression ou une traction centrale, se déforme de façon à générer, lorsque ladite plaque 2 est réalisée sensiblement plane, une convexité (ou concavité, selon le point de vue), ou bien, lorsque ladite plaque est réalisée sensiblement bombée ou convexe, de façon à accentuer une convexité (ou concave, selon le point de vue), ou bien encore à diminuer une convexité (ou concavité, selon le point de vue). Par exemple, lorsque ladite plaque 2 est réalisée sensiblement bombée ou convexe (ou concave, selon le point de vue), une pression ou une traction extérieure suffisante et appliquée au(x) bon(s) endroit(s) de ladite plaque 2, peut rendre ladite plaque 2 sensiblement plane, tant que ladite pression ou traction est exercée.

Selon la présente invention, et comme représenté aux figures, la forme de ladite plaque 2 présente un centre C et des rayons r.

De préférence, ledit centre C est un centre géométrique de ladite forme de ladite plaque 2, par exemple un centre de gravité et/ou un barycentre.

Préférentiellement, chacun desdits rayons r est un segment dont une première extrémité se confond avec ledit centre C, et une seconde extrémité est un point d'extrémité périphérique P, c'est-à-dire un point d'un bord 3 de ladite plaque 2.

Avantageusement, et comme illustré aux figures, ladite forme de ladite plaque 2 est sensiblement circulaire ou elliptique. Dans le cas d'une plaque 2 de forme circulaire, lesdits segments sont tous sensiblement de même longueur, ladite plaque 2 présentant la forme d'un disque, et le bord 3 de ladite plaque 2 décrivant un cercle.

Alternativement, ladite forme de ladite plaque 2 est triangulaire, rectangulaire, carrée, trapézoïdale, ou tout autre géométrie ou polygone approprié.

De préférence, lorsque ladite plaque 2 est légèrement bombée (concave ou convexe selon le point de vue), ladite forme de ladite plaque 2 est assimilée aux caractéristiques susmentionnées lorsque ladite plaque 2 bombée est mise à plat.

De préférence, ladite face réfléchissante 4 présente une surface sensiblement lisse, destinée à réfléchir un faisceau lumineux, et à introduire une aberration optique ou la corriger quand ledit miroir 1 est activement déformé. Ainsi, ladite surface réfléchissante 4 est avantageusement unie, sans inégalité ni aspérité, et est préférentiellement destinée à recevoir un faisceau lumineux incident pour le refléter sous la forme d'un faisceau lumineux réfléchi présentant soit une aberration optique non présente dans le faisceau incident, soit une correction d'une aberration optique présente dans le faisceau incident, voire les deux.

Ladite face cachée 5 est préférentiellement destinée à subir des pressions ou des tractions permettant de déformer ladite plaque 2 de façon appropriée, c'est-à-dire d'une façon satisfaisante pour que le miroir 1 remplisse son rôle dans un système d'optique adaptative.

Ladite plaque 2 présente ainsi avantageusement une forme plate ou légèrement bombée, présentant deux faces réfléchissante 4 cachée 5 qui sont opposées l'une à l'autre et qui sont séparées par l'épaisseur de ladite plaque 2, ladite épaisseur préférentiellement étant relativement faible par rapport aux dimensions d'extension desdites faces 4, 5 de ladite plaque 2.

Lesdites faces réfléchissantes 4 et cachée 5 de ladite plaque 2 sont préférentiellement d'une seule pièce avec ladite plaque 2, par exemple usinées dans un même matériau.

Alternativement, ladite plaque 2 est constituée de plusieurs parties de plaque rapportées ou collées les unes avec les autres, l'une des parties de plaque 2 comprenant par exemple la face réfléchissante 4, et une autre des parties de plaque 2 comprenant par exemple la face cachée 5.

Selon la présente invention, le miroir déformable 1 comporte également au moins un actionneur (non représenté) destiné à exercer une force sur ladite face cachée 5 pour déformer ladite plaque 2. En d'autres termes, ledit miroir déformable 1 comprend au moins un actionneur, conçu pour exercer une pression ou une traction sur ladite plaque 2 du côté de ladite face cachée 5, de façon à déformer ladite plaque 2 efficacement pour introduire ou corriger une aberration optique d'un faisceau lumineux réfléchit par ladite face réfléchissante 4, plus précisément en déformant localement la courbure de ladite plaque 2 (et donc plus généralement la courbure du miroir ou plus exactement la courbure de sa face réfléchissante 4). Cela a pour effet que ladite courbure varie, au moins localement, en fonction de la force exercée par ledit actionneur sur ladite face cachée 5.

Avantageusement, ledit actionneur est conçu pour appliquer ladite force audit centre C.

De préférence, ladite force s'exerce selon une direction sensiblement perpendiculaire localement à ladite surface réfléchissante 4.

Préférentiellement, le miroir déformable 1 comprend en outre un support fixe sur lequel ladite plaque 2 est en appui périphérique, ledit support fixe étant de préférence lié à un bâti. Néanmoins, la plaque 2, même si elle repose sur ledit support, est avantageusement suffisamment rigide et solide pour qu'il n'y ait pas besoin de lui adjoindre une structure de maintien, par exemple une ossature, pour garantir sa tenue mécanique propre. En d'autres termes, la plaque 2 assure de préférence elle-même par construction sa propre tenue mécanique, sans nécessité d'une ossature, trame, d'un squelette ou autre structure de rigidification.

Alternativement, ledit miroir déformable 1 comprend des actionneurs périphériques (seuls ou en combinaison avec ledit support fixe) sur lesquels ladite plaque 2 est en appui périphérique.

Avantageusement, ledit ou lesdits actionneurs peuvent être de tout type (piézoélectrique, magnétique, en deux parties, mécanique, à vis, etc.), dont ceux qui sont connus de l'homme du métier. Par exemple, ledit actionneur est relié à ladite face cachée 5 via un point de colle, et transmet une force de traction ou de pression localement à la surface de ladite face cachée 5 pour déformer ladite plaque 2, ladite force étant de préférence sensiblement localement transversale à ladite face réfléchissante 4.

Avantageusement, ladite plaque 2 comporte au moins un bord 3 qui est soit attaché à audit support fixe, soit lui-même relié à un ou plusieurs actionneurs, ou une combinaison des deux (c'est-à-dire que certaines parties dudit bord 3 sont reliées à des actionneurs, tandis que d'autres parties dudit bord 3 sont reliées audit support fixe).

Les figures 1 à 5 illustrent la face cachée 5 d'un miroir déformable 1 en l'absence desdits actionneurs et dudit bâti.

De préférence, ledit miroir 1 ne comprend qu'un seul actionneur ou un nombre limité d'actionneurs, par exemple un, deux ou trois, pour remplir sa fonction d'optique adaptative, c'est-à-dire introduire ou corriger une aberration optique dans un faisceau lumineux.

Par exemple, ladite face cachée 5 est destinée à être soumise à la traction et/ou la pression d'un actionneur ou ensemble d'actionneurs, de préférence un unique actionneur central ou un ensemble d'actionneurs centraux, c'est-à-dire un seul actionneur ou un ensemble d'actionneurs exerçant une force sur ladite plaque 2 dans une zone concentrée sur et/ou autour dudit centre C.

Selon un autre exemple, ladite face cachée 5 est destinée à être soumise à la pression et/ou la traction d'un actionneur de type pression/dépression de fluide, ladite pression ou dépression étant générée au sein dudit support pour créer respectivement, du côté de la face réfléchissante, une convexité ou une concavité de ladite plaque 2.

Selon encore un autre exemple, ladite face cachée est destinée à être soumise à une pluralité d'actionneurs répartis uniformément sur la face cachée 5, c'est-à-dire reliés à ladite face cachée 5 de façon régulière, la densité de liaisons actionneurs/face cachée 5 étant à peu près égale sur toute ladite face cachée 5.

Selon la présente invention, ladite plaque 2 comprend une pluralité de portions primaires 6 et secondaires 7, lesdites portions secondaires 7 étant interposées entre lesdites portions primaires 6. En d'autres termes, ladite plaque 2 est divisée en une alternance de portions primaires 6 et secondaires 7. Avantageusement, chacune desdites portions primaires 6 est bordée par au moins deux portions secondaires 7, et inversement, chacune desdites portions secondaires 7 est bordée par au moins deux portions primaires 6. De préférence, lesdites portions primaires 6 et secondaires 7 occupent au moins une partie de l'aire de ladite face cachée 5, et plus préférentiellement, elles occupent la totalité de l'aire de ladite face cachée 5. Ainsi, chacune desdites portions primaires 6 et secondaire 7 présente avantageusement une aire inférieure à l'aire totale de ladite face cachée 5, et ladite pluralité de portions primaires 6 et ladite pluralité de portions secondaires 7 présentent chacune une aire inférieure à l'aire totale de ladite face cachée 5.

De préférence, ladite plaque 2 comprend autant de portions primaires 6 que de portions secondaires 7.

Selon la présente invention, et comme illustré aux figures, chacune desdites portions primaires 6 s'étend sensiblement localement le long et de part et d'autre d'un rayon respectif r' parmi lesdits rayons r. En d'autres termes, ladite portion primaire 6 présente une forme sensiblement allongée, qui suit au moins, sur une partie significative, un rayon respectif r' parmi lesdits rayons r de ladite plaque 2, ledit rayon respectif r' coupant avantageusement ladite portion primaire 6 en au moins deux parties 6a, 6b. Dans ce qui suit, pour des raisons de clarté, on désignera « *ladite* » portion primaire 6, au singulier, comme se référant à la portion primaire 6, parmi lesdites portions primaires 6, qui est associée audit rayon respectif r' précité, chacune desdites autres portions primaires 6 étant associée à un rayon respectif r' différent (c'est-à-dire un rayon respectif r' différent par portion primaire 6, lesdits rayons respectifs r' étant de préférence de même longueur), et présentant, avantageusement, les mêmes caractéristiques décrites ci-après que ladite portion primaire 6. Ainsi, les formulations « *chacune desdites portions primaires 6* » et « *ladite portion primaire 6* » sont par exemple équivalentes. Lesdites portions primaires 6 sont de préférence toutes semblables, excepté leur positionnement spatial.

De préférence, et comme illustré aux figures, ledit rayon respectif r' coupe ladite portion primaire 6 en deux parties 6a, 6b, avantageusement d'aires sensiblement égales. Plus préférentiellement encore, lesdites parties 6a, 6b sont sensiblement symétriques, ledit rayon respectif r' formant leur axe de symétrie.

De préférence, et comme représenté aux figures, ledit rayon respectif r' est entièrement inscrit dans ladite portion primaire 6. Alternativement, seule une fraction dudit rayon respectif r' est inscrite dans ladite portion primaire 6, ladite fraction dudit rayon respectif r' étant avantageusement continue, c'est-à-dire ne comprenant qu'un seul tronçon.

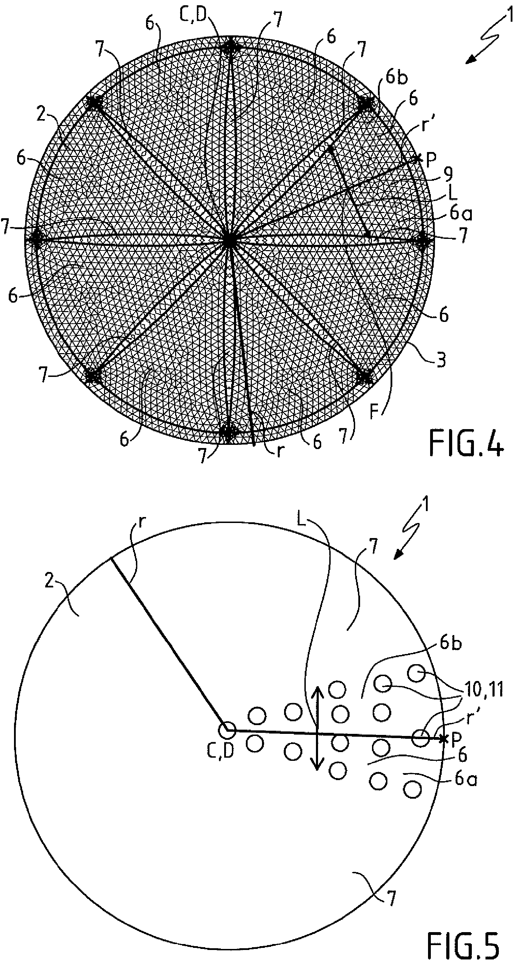

Avantageusement, et comme illustré aux figures 1 et 4, lesdites portions primaires 6 sont angulairement uniformément réparties autour dudit centre C. En d'autres termes, lesdites portions primaires 6 s'étendent préférentiellement chacune le long d'un rayon respectif r' différent, l'angle séparant deux rayons respectifs r' adjacents étant toujours sensiblement le même.

Avantageusement, et comme illustré aux figures 1 et 4, ledit miroir déformable 1 comprend au moins huit portions primaires 6, de préférence au moins dix portions primaires 6. Par exemple, et comme représenté aux figures 1 et 4, ledit miroir déformable 1 comprend huit portions primaires 6 et donc huit rayons respectifs r', chacun desdits huit rayons respectifs r' étant séparé du rayon respectif r' qui lui est adjacent par un angle d'environ 45 degrés.

Selon la présente invention, et comme illustré aux figures, chacune desdites portions primaires 6 présente une raideur différente de celle(s) desdites portions secondaires 7 qui lui sont adjacentes. En d'autres termes, ladite portion primaire 6 de ladite plaque 2 se déforme plus difficilement ou plus facilement que les portions secondaires 7 qui la bordent et qui sont de préférence au moins deux. Cela signifie que chaque portion primaire 6 présente une résistance à la déformation élastique différente de celle des portions secondaires 7 adjacentes. En d'autres termes encore, ladite portion primaire 6 est une partie de ladite plaque 2 qui se déforme plus ou moins facilement, notamment en flexion, sous l'action dudit/desdits actionneur(s), qu'une autre partie de plaque 2 comprenant lesdites portions secondaires 7 adjacentes à ladite portion primaire 6. En corollaire, chaque portion secondaire 7 présente avantageusement une raideur différente de celle(s) desdites portions primaires 6 qui lui sont adjacentes.

Avantageusement, chacune desdites portions secondaires 7 adjacentes à ladite portion primaire 6 présente une seule et même raideur.

Préférentiellement, lesdites portions primaires 6 présentent toutes une même raideur primaire, et lesdites portions secondaires 7 présentent toute une même raideur secondaire, lesdites raideurs primaire et secondaire étant sensiblement différentes l'une de l'autre.

Selon une variante de réalisation de l'invention, et comme illustré à la figure 1, ladite portion primaire 6 présente une raideur supérieure à celle(s) desdites portions secondaires 7 qui lui sont adjacentes.

Selon une autre variante de réalisation de l'invention, et comme représenté à la figure 4, ladite portion primaire 6 présente une raideur inférieure à celle(s) desdites portions secondaires 7 qui lui sont adjacentes.

De préférence, et comme représenté aux figures, ladite portion primaire 6 présente une surépaisseur ou une sous-épaisseur par rapport auxdites portions secondaires 7 qui lui sont adjacentes.

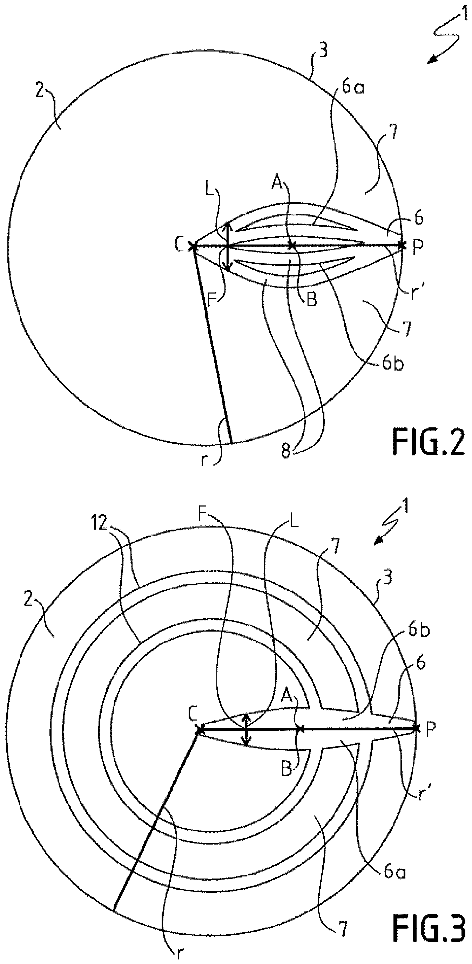

La figure 1 illustre ainsi un miroir déformable 1 dont une portion primaire 6 présente une surépaisseur, tandis que la figure 4 illustre un miroir déformable 1 dont une portion primaire 6 présente une sous-épaisseur. Les figures 2, 3 et 5 illustrent chacune un miroir déformable 1 dont la portion primaire 6 peut être soit en relief, présentant alors une surépaisseur, soit en dépression, présentant alors une sous-épaisseur.

De préférence, ladite surépaisseur ou sous-épaisseur de ladite portion primaire 6 lui confère une raideur respectivement supérieure ou inférieure auxdites portions secondaires 7 adjacentes à ladite portion primaire 6. Par exemple, la figure 1 illustre un miroir 1 dont la raideur supérieure de ladite portion primaire 6 par rapport à celle(s) desdites portions secondaires 7 qui lui sont adjacentes est obtenue à l'aide de la surépaisseur de ladite portion primaire 6 par rapport auxdites portions secondaires 7 qui lui sont adjacentes.

De préférence, un usinage de ladite plaque 2 est pratiqué du côté de ladite face cachée 5 pour former au moins partiellement ladite surépaisseur ou ladite sous-épaisseur. Ainsi, notamment dans le cas où l'on veut que ladite portion primaire 6 présente une surépaisseur, on procède par exemple à un usinage desdites portions secondaires 7 adjacentes à ladite portion primaire 6. Au contraire, dans le cas où l'on veut que ladite portion primaire 6 présente une sous-épaisseur, on procède à un usinage de ladite portion primaire 6. De préférence, lorsque la portion primaire 6 est usinée, elle présente une raideur inférieure à celle(s) desdites portions secondaires 7 adjacentes à ladite portion primaire, et inversement, lorsque lesdites portions secondaires 7 adjacentes à ladite portion primaire 6 sont usinées, ladite portion primaire 6 présente une raideur supérieure à celle(s) des portions secondaires 7 adjacentes à ladite portion primaire 6.

Alternativement, ladite surépaisseur est formée au moins partiellement par une tranche déformable rapportée, par exemple collée, sur ladite plaque 2, formant ainsi ladite portion primaire 6. Préférentiellement, ladite tranche est réalisée à partir du même matériau que celui du reste de la plaque 2. Alternativement, ladite tranche est réalisée à partir d'un matériau flexible différent de celui du reste de ladite plaque 2. De manière générale, ladite tranche (et en fait ladite surépaisseur) vient préférentiellement augmenter la raideur de ladite portion primaire 6. Par exemple, ladite surépaisseur est formée par une tranche déformable rapportée sur ladite plaque 2, formant ainsi ladite portion primaire 6, et par un usinage des portions secondaires 7 qui lui sont adjacentes.

Ladite surépaisseur ou ladite sous-épaisseur peut également être réalisée à l'aide de tout procédé approprié, par exemple une gravure sélective, un dépôt sélectif, etc., soit de ladite portion primaire 6, soit desdites portions secondaires 7 qui lui sont adjacentes. Ladite surépaisseur ou ladite sous-épaisseur peut aussi être réalisée à l'aide d'une combinaison des procédés et moyens précités, par exemple le collage d'une tranche sur la portion primaire 6 suivi d'un usinage desdites portions secondaires 7 adjacentes à ladite portion primaire 6.

Selon une alternative, et comme illustré aux figures 1 et 3, ladite portion primaire 6 présente une structure continue. En d'autres termes, ladite portion primaire 6 n'est pas formée de points épars isolés, mais préférentiellement présente plutôt une surface sensiblement lisse et plate localement. Un exemple d'une telle structure continue est ainsi illustré aux figures 1 et 3, où de surcroît ladite portion primaire 6 présente avantageusement une forme générale de pétale ou de fuseau, ledit pétale étant de préférence d'un seul tenant.

Selon une autre alternative illustrée par les modes de réalisation de l'invention des figures 2, 4 et 5, ladite portion primaire 6 présente une structure discrète. En d'autres termes, ladite portion primaire 6 présente une structure formée de points épars, isolés les uns des autres.

Des exemples d'une telle structure discrète sont illustrés aux figures 4 et 5, où ladite portion primaire 6 comporte un ensemble de cavités 9, 10 ou de saillies 11 pratiquées dans son épaisseur, de façon à conférer à ladite portion primaire (6) ladite raideur différente de celle(s) desdites portions secondaires (7) qui lui sont adjacentes.

La figure 4 illustre notamment un miroir 1 dont la portion primaire 6 présente un ensemble de cavités 9 réparties régulièrement sur l'aire de ladite portion primaire 6, lesdites cavités 9 diminuant la raideur de ladite portion primaire 6 par rapport auxdites portions secondaires 7 qui lui sont adjacentes. Lesdites cavités 9 de ladite portion primaire 6 lui confèrent un caractère discontinu ou discret, ainsi qu'une sous-épaisseur par rapport auxdites portions secondaires 7 adjacentes à ladite portion primaire 6. En pratique, la raideur de ladite portion primaire 6 du miroir 1 illustré à la figure 4 est inférieure à celle(s) desdites portions secondaires 7 adjacentes à ladite portion primaire 6.

La figure 5 illustre notamment un miroir 1 dont la portion primaire 6 présente un ensemble de cavités 10 ou de saillies 11 (les points noirs pouvant représenter les premières ou les secondes), réparties irrégulièrement sur l'aire de ladite portion primaire 6, lesdites cavités 10 ou saillies 11 respectivement diminuant ou augmentant la raideur de ladite portion primaire 6 par rapport auxdites portions secondaires 7 qui lui sont adjacentes. La répartition avantageusement irrégulière desdites cavités 10 ou desdites saillies 11, qui sont par exemple plus densément réparties près dudit centre C que d'un bord 3 de ladite plaque 2, confère à ladite portion primaire 6 une raideur plus proche de celle(s) desdites portions secondaires 7 qui lui sont adjacentes au niveau de l'endroit où les cavités ou saillies 11 sont les moins densément réparties (c'est-à-dire ledit centre C ici), et inversement, cette répartition irrégulière confère à ladite portion primaire 6 une raideur plus éloignée de celle(s) desdites portions secondaires 7 qui lui sont adjacentes au niveau de l'endroit où les cavités 10 ou saillies 11 sont les plus densément réparties (c'est-à-dire un bord 3 ici). Lesdites cavités 10 ou saillies 11 sont préférentiellement relativement petites, c'est-à-dire d'aire individuelle significativement inférieure par rapport à l'aire totale de ladite face cachée 5, de préférence au moins 10 fois plus faible, plus préférentiellement encore au moins 20 fois plus faible, encore plus préférentiellement au moins 50 fois plus faible.

Un autre exemple d'une telle structure discrète est notamment illustré à la figure 2, où ladite portion primaire 6 présente également une forme générale de pétale ou de fuseau, ladite forme de ladite portion primaire 6 étant divisée en plusieurs languettes 8 allongées et courbées, présentant une largeur (qui reste constante ou qui varie) et une longueur, distinctes et écartées les unes des autres, sauf à leurs extrémités respectives où elles se rejoignent, lesdites extrémités étant ici d'une part ledit centre C et d'autre part à un point d'extrémité périphérique P de ladite plaque 2. En pratique, lesdites languettes 8 sont préférentiellement des surépaisseurs ou des sous-épaisseurs pratiquées dans ladite plaque 2 du côté de sa face cachée.

Selon un autre exemple de réalisation, lesdites portions primaires 6 sont formées par des portions de ladite plaque 2 qui ont subi une altération des propriétés physiques du ou des matériau(x) constituant ladite plaque 2 pour en modifier ainsi la raideur.

Selon encore un autre exemple de réalisation (non illustré aux figures), chaque portion primaire 6 est formée en un ou plusieurs premier(s) matériau(x) tandis que chaque portion secondaire 7 est formée en un ou plusieurs deuxième(s) matériau(x), lesdits premier(s) et deuxième(s) matériaux étant de raideurs différentes. La différence de raideur est donc obtenue dans ce cas par la mise en œuvre de matériaux différents pour former les portions primaires 6 et secondaires 7, de sorte que la plaque 2 présente un caractère composite.

De préférence, et comme illustré aux figures, ladite portion primaire 6 présente également une dimension L qui est localement sensiblement transversale audit rayon respectif r' et parallèle à ladite face réfléchissante 4 et qui varie le long dudit rayon respectif r'. En d'autres termes, ladite portion primaire 6, qui s'étend sensiblement localement le long dudit rayon r' et présente ainsi une longueur inférieure ou égale audit rayon respectif r', présente également une largeur qui est localement sensiblement perpendiculaire à ladite longueur, qui s'étend sur la plaque 2, qui est localement perpendiculaire à la direction d'extension locale de l'épaisseur de ladite plaque 2, et qui varie. Les termes *« localement* » et « *local* » peuvent ici s'entendre afin de considérer les dimensions d'un point de vue circonscrit ou approché, c'est-à-dire afin d'approximer une plaque 2 sensiblement localement plate quand ledit miroir déformable 1 est légèrement bombé (concave ou convexe). En pratique, la portion primaire 6 modifie de façon significative et différenciée la rigidité ou raideur radiale de ladite plaque 2, qu'il est plus difficile ou plus facile de déformer selon son rayon respectif r' ; en d'autres termes, de déformer une partie de ladite plaque 2 de façon en rapprochant ou en éloignant, à l'aide d'un actionneur, une partie de ladite plaque 2 comprenant un segment de rayon respectif r' d'une autre partie de ladite plaque 2 comprenant le reste du rayon respectif r'.

Alternativement, ladite dimension transversale L reste sensiblement constante tout le long dudit rayon respectif r'.

De préférence, et comme illustré aux figures, ladite dimension transversale L croît, en partant dudit centre C, vers l'extérieur, le long dudit rayon respectif r', jusqu'à un point primaire A situé sur ledit rayon respectif r' et à distance dudit centre C.

Alternativement, ladite dimension transversale L décroît, en partant dudit centre C, vers l'extérieur, le long dudit rayon respectif r', jusqu'à un point tertiaire situé sur ledit rayon respectif r' et à distance dudit centre C.

De préférence, la dimension transversale L, le long du rayon respectif r', varie de manière significative, maîtrisée, continue, et régulière

Préférentiellement, la dimension transversale L présente une valeur minimum et une valeur maximum entre lesquelles elle varie. L'écart entre les valeurs minimum et maximum est avantageusement significatif, maîtrisé, c'est-à-dire déterminé et non accidentel, et présente par exemple une grandeur égale à au moins 5%, de préférence au moins 10%, voire au moins 30%, ou encore par exemple au moins 50% de la grandeur du rayon respectif r'. De préférence, la dimension transversale L varie de manière à ce que la portion primaire 6 associée forme un ensemble significatif et cohérent, c'est-à-dire présentant une taille, une surface, une aire déterminée et non négligeable par rapports aux dimensions de la plaque 2. De manière avantageuse, ladite variation de ladite dimension transversale L ne résulte pas d'un accident, d'une erreur, ou d'une approximation de construction du miroir déformable 1, en particulier de ladite plaque 2, et plus particulièrement de la portion primaire 6 associée à ladite dimension transversale L.

Avantageusement, la distance entre ledit centre C et ledit point primaire A (ou alternativement ledit point tertiaire) représente, comme illustré aux figures 1 à 3, au moins 30%, de préférence au moins 50%, ou comme représenté aux figures 4 et 5, encore plus préférentiellement au moins 80%, ou encore plus préférentiellement la totalité de la longueur dudit rayon respectif r'. Ce dernier exemple peut avantageusement se comprendre comme une croissance (ou alternativement une décroissance), de préférence continue, de ladite dimension transversale L du centre C jusqu'à un bord 3 de ladite plaque 2 (ou alternativement, un bord 3 ou un point d'extrémité périphérique dudit rayon respectif r'), notamment dans le cas d'une plaque 2 de forme circulaire ou elliptique.

Selon une alternative, et notamment lorsque ladite dimension transversale L ne fait que croître, de façon continue, dudit centre C, vers l'extérieur, tout le long dudit rayon respectif r', ladite portion primaire 6 est formée par un secteur circulaire respectif de ladite plaque 2.

Préférentiellement, et comme illustré aux figures 1 à 3, ladite dimension transversale L croît, en partant d'un point d'extrémité périphérique P dudit rayon respectif r' et/ou d'un bord 3 de ladite plaque 2 vers ledit centre C (c'est-à-dire vers l'intérieur de ladite plaque 2), le long dudit rayon respectif r', jusqu'à un point secondaire B situé sur ledit rayon respectif r' et à distance dudit point d'extrémité périphérique P et/ou dudit bord 3.

Préférentiellement, et comme illustré aux figures 1 à 3, la distance entre ledit point d'extrémité périphérique P et/ou ledit bord 3 et ledit point secondaire B représente au moins 30%, plus préférentiellement au moins 50% de la longueur dudit rayon respectif r'.

Alternativement, ladite dimension transversale L décroît, en partant d'un bord 3 de ladite plaque 2, vers ledit centre C, le long dudit rayon respectif r', jusqu'à un point quaternaire D situé sur ledit rayon respectif r' et à distance dudit bord 3. Selon un exemple particulier, et comme illustré aux figures 4 et 5, le point quaternaire D est confondu avec ledit centre C, ladite dimension transversale L décroissant dudit bord 3 jusqu'au centre C le long dudit rayon respectif r' ; cela revient au cas où ladite dimension transversale L croît, en partant dudit centre C, jusqu'à un bord 3 de ladite plaque 2.

De préférence, ledit bord 3 est sécant avec ledit rayon respectif r'. Plus préférentiellement encore, ledit bord 3 est coupé en deux parties de même longueurs, et symétriques, par ledit rayon respectif r'.

Selon une variante de réalisation de l'invention, et comme illustré aux figures 1 à 3, ledit point primaire A et ledit point secondaire B sont confondus.

Selon une autre variante de l'invention, non illustrée, ledit point primaire A et ledit point secondaire B ne sont pas confondus. Avantageusement, ladite dimension transversale L, le long dudit rayon respectif r', reste sensiblement constante entre lesdits points primaire A et secondaire B.

Ainsi, dans les deux dernières variantes susmentionnées, et, quel que soit le sens, ladite dimension transversale L croît puis décroît le long dudit rayon respectif r', en partant d'une extrémité dudit rayon respectif r' à l'autre (par exemple ledit centre C et un point d'extrémité périphérique P).

Selon une encore une autre variante de réalisation de l'invention, non illustrée, ledit point tertiaire et ledit point quaternaire D sont confondus.

Selon encore une autre variante de l'invention, non illustrée, ledit point tertiaire et ledit point quaternaire D ne sont pas confondus.

Pour cette dernière variante, ladite dimension transversale L, le long dudit rayon respectif r', reste par exemple sensiblement constante entre lesdits points tertiaire et quaternaire D.

Ainsi, dans les deux dernières variantes susmentionnées, ladite dimension transversale L décroît puis croît le long dudit rayon respectif r', en partant d'une extrémité dudit rayon respectif r' à l'autre (par exemple ledit centre C et un point d'extrémité périphérique P), et ce, quel que soit le sens.

De préférence, ladite dimension transversale L, considérée en un point F dudit rayon respectif r', satisfait à l'équation : L=-L₀∗N²∗ln(N²), où N est le rapport entre, d'une part, la distance CF entre ledit centre C et ledit point F, et, d'autre part, la longueur totale dudit rayon respectif r', L₀ étant une constante ajustée en fonction du nombre de portions primaires 6 pour que celles-ci ne se chevauchent pas.

Tout combinaison des différentes variantes et exemples susmentionnés est bien évidemment possible, au regard de ce qu'il semble pertinent pour l'homme du métier désirant réaliser un miroir déformable approprié.

De préférence, et comme illustré à la figure 3, le miroir 1 comprend également, du côté de la face cachée 5 de la plaque 2, notamment lorsque celle-ci est de forme circulaire ou elliptique, une ou plusieurs zones de ladite plaque 2 qui sont en forme d'anneau 12 et qui présentent une raideur différente de celle(s) desdites portions primaires 6 et/ou de celle(s) desdites portions secondaires 7, le(s)dit(s) anneau(x) 12 ayant pour centre ledit centre C. De préférence, et comme illustré à la figure 3, le(s)dit(s) anneau(x) est/sont réalisé(s) dans ou rapporté(s) sur l'épaisseur de la plaque 2, et sont des surépaisseurs ou sous-épaisseurs par rapport auxdites portions primaires 6 et/ou secondaires 7. Plus préférentiellement, lesdits anneaux 12 sont sécants avec ladite portion primaire 6. En pratique, ils modifient peu la rigidité ou raideur radiale, mais ils permettent de réduire les erreurs de forme desdites portions primaires 6 ou les modes de résonnance entre lesdites portions primaires 6.

De façon avantageuse, chacune desdites portions secondaires 7 s'étend sensiblement localement le long et de part et d'autre d'un rayon respectif r' parmi lesdits rayons r. Ainsi, chacune desdites portions primaires 6 et/ou secondaires 7 s'étend préférentiellement sensiblement localement le long et de part et d'autre d'un rayon respectif r' parmi lesdits rayons r. La portion secondaire 7 présente en particulier une dimension L (respective) qui est localement sensiblement transversale au rayon respectif r' et parallèle à la face réfléchissante 4 et qui varie le long du rayon respectif r'. La dimension transversale L de la portion secondaire 7 peut notamment avoir des propriétés dimensionnelles analogues à la dimension transversale de la portion primaire 6. Par exemple, chaque dimension transversale L respective croît, en partant du centre C, vers l'extérieur, le long du rayon respectif r', jusqu'à un point primaire A respectif situé sur le rayon respectif r' et à distance du centre C. Selon le mode de réalisation de la figure 1, donné à titre illustratif, en partant du centre C, la dimension transversale L respective de la portion primaire 6 croît puis décroît le long du rayon respectif r', tandis que la dimension transversale L respective de la portion secondaire 7 ne fait que croître le long du rayon respectif r'.

De façon avantageuse, les portions secondaires 7 présentent des formes complémentaires de celles des portions primaires 6. Par exempte, comme illustré à la figure 1, lorsque chaque portion primaire 6 présente une forme respective de pétale, et que la plaque 2 présente une forme générale sensiblement circulaire ou elliptique, chaque portion secondaire 7 est, en conséquence, avantageusement formée par l'intervalle de la plaque 2 séparant deux pétales adjacents.

Préférentiellement, lesdites portions secondaires 7 sont angulairement uniformément réparties autour du centre C. De préférence, le miroir déformable 1 comprend au moins huit portions secondaires 7, voire au moins dix portions secondaires 7.

Par exemple, la portion secondaire 7 présente une structure continue, comme illustré à la figure 1. Selon un autre exemple, la portion secondaire 7 présente une structure discrète, comme illustré à la figure 4. Selon un mode de réalisation, chaque portion primaire 6 et/ou secondaire 7 est formée par un usinage de ladite plaque 2 pratiqué du côté de ladite face cachée 5. La portion secondaire 7 comporte, selon un mode de réalisation, un ensemble de cavités ou de saillies pratiquées dans son épaisseur, de façon à conférer à la portion secondaire 7 une raideur différente de celle(s) des portions primaires 6 qui lui sont adjacentes. Selon un mode de réalisation particulier, les portions secondaires 7 sont formées par des portions respectives de ladite plaque 2 qui ont subi une altération des propriétés physiques du ou des matériau(x) constituant ladite plaque 2 pour en modifier ainsi la raideur. Selon un exemple, chaque portion secondaire 7 est formée par un secteur circulaire respectif de ladite plaque 2. Selon un autre exemple encore, chaque portion secondaire 7 présente une forme générale de pétale ou de fuseau, comme illustré à la figure 4.

L'invention concerne, selon un autre aspect, un procédé de fabrication d'un miroir déformable 1. Ledit procédé est préférentiellement mis en œuvre pour fabriquer le miroir déformable 1 décrit ci-dessus, mais peut également être mis en œuvre pour réaliser d'autres miroirs, sans que l'on sorte du cadre de l'invention. La description qui précède concernant le miroir déformable 1 est donc valable, *mutatis mutandis*, pour le procédé selon l'invention.

Selon l'invention, ledit procédé comporte :
- d'une part, au moins une étape de réalisation d'une plaque 2 possédant une face réfléchissante 4 et une face cachée 5 opposée et dont la forme présente un centre C et des rayons r, ladite plaque 2 comprenant une pluralité de portions primaires 6 et secondaires 7, lesdites portions secondaires 7 étant interposées entre lesdites portions primaires 6, chacune desdites portions primaires 6 s'étendant sensiblement localement le long et de part et d'autre d'un rayon respectif r' parmi lesdits rayons r et présentant une raideur différente de celle(s) desdites portions secondaires 7 qui lui sont adjacentes, et
- d'autre part, au moins une étape de mise en place d'au moins un actionneur destiné à exercer une force sur ladite face cachée 5 pour déformer ladite plaque 2.

De préférence, lors de ladite étape de réalisation de ladite plaque 2, on réalise lesdites portions primaires 6 de sorte qu'elles présentent chacune une dimension L qui est localement sensiblement transversale audit rayon respectif r' et parallèle à ladite face réfléchissante 4, et qui varie le long dudit rayon respectif r'.

Alternativement, on réalise ladite portion primaire 6 de sorte que ladite dimension transversale L reste constante tout le long dudit rayon respectif r'.

Avantageusement, lors de ladite étape de réalisation de ladite plaque 2, on réalise chacune desdites portions primaires 6 de façon qu'elle s'étend sensiblement localement le long et de part et d'autre d'un rayon respectif r' parmi lesdits rayons r. Plus avantageusement encore, lors de ladite étape de réalisation de ladite plaque 2, on réalise lesdites portions secondaires 7 de sorte qu'elles présentent chacune une dimension L respective qui est localement sensiblement transversale audit rayon respectif r' et parallèle à ladite face réfléchissante 4, et qui varie le long dudit rayon respectif r'.

## Revendications

1. Miroir déformable (1) comportant d'une part une plaque (2) possédant une face réfléchissante (4) et une face cachée (5) opposée et dont la forme présente un centre (C) et des rayons (r), et d'autre part au moins un actionneur destiné à exercer une force sur ladite face cachée (5) pour déformer ladite plaque (2), **caractérisé en ce que** ladite plaque (2) comprend une pluralité de portions primaires (6) et secondaires (7), lesdites portions secondaires (7) étant interposées entre lesdites portions primaires (6), chacune desdites portions primaires (6) s'étendant sensiblement localement le long et de part et d'autre d'un rayon respectif (r') parmi lesdits rayons (r) et présentant une raideur différente de celle(s) desdites portions secondaires (7) qui lui sont adjacentes, ladite plaque (2) présentant une tenue mécanique propre.

2. Miroir déformable (1) selon la revendication précédente, **caractérisé en ce que** ladite forme de ladite plaque (2) est sensiblement circulaire ou elliptique.

3. Miroir déformable (1) selon la revendication 1 ou 2, **caractérisé en ce que** ladite portion primaire (6) présente une dimension (L) qui est localement sensiblement transversale audit rayon respectif (r') et parallèle à ladite face réfléchissante (4) et qui varie le long dudit rayon respectif (r').

4. Miroir déformable (1) selon la revendication 3, **caractérisé en ce que** ladite dimension transversale (L) croît, en partant dudit centre (C), vers l'extérieur, le long dudit rayon respectif (r'), jusqu'à un point primaire (A) situé sur ledit rayon respectif (r') et à distance dudit centre (C).

5. Miroir déformable (1) selon la revendication précédente, **caractérisé en ce que** la distance entre ledit centre (C) et ledit point primaire (A) représente au moins 30%, de préférence au moins 50%, encore plus préférentiellement au moins 80%, ou encore plus préférentiellement la totalité de la longueur dudit rayon respectif (r').

6. Miroir déformable (1) selon l'une quelconque des revendications 3 à 5, **caractérisé en ce que** ladite dimension transversale (L) croît, en partant d'un point d'extrémité périphérique (P) dudit rayon respectif (r') et/ou d'un bord (3) de ladite plaque (2) vers ledit centre (C), le long dudit rayon respectif (r'), jusqu'à un point secondaire (B) situé sur ledit rayon respectif (r') et à distance dudit point d'extrémité périphérique (P) et/ou dudit bord (3).

7. Miroir déformable (1) selon la revendication précédente, **caractérisé en ce que** la distance entre ledit point d'extrémité périphérique (P) et/ou ledit bord (3) et ledit point secondaire (B) représente au moins 30%, plus préférentiellement au moins 50% de la longueur dudit rayon respectif (r').

8. Miroir déformable (1) selon les revendications 4 ou 5 et 6 ou 7, **caractérisé en ce que** ledit point primaire (A) et ledit point secondaire (B) sont confondus.

9. Miroir déformable (1) selon les revendications 4 ou 5 et 6 ou 7, **caractérisé en ce que** ledit point primaire (A) et ledit point secondaire (B) ne sont pas confondus.

10. Miroir déformable (1) selon la revendication précédente, **caractérisé en ce que** ladite dimension transversale (L), le long dudit rayon respectif (r'), reste sensiblement constante entre lesdits points primaire (A) et secondaire (B).

11. Miroir déformable (1) selon l'une quelconque des revendications 3 à 10, **caractérisé en ce que** ladite dimension transversale (L) croît puis décroît le long dudit rayon respectif (r').

12. Miroir déformable (1) selon l'une quelconque des revendications précédentes, **caractérisé en ce que** lesdites portions primaires (6) sont angulairement uniformément réparties autour dudit centre (C).

13. Miroir déformable (1) selon l'une quelconque des revendications précédentes, **caractérisé en ce que** ladite dimension transversale (L), considérée en un point (F) dudit rayon respectif (r'), satisfait à l'équation : L=-L₀∗N²∗ln(N²), où N est le rapport entre, d'une part, la distance (CF) entre ledit centre (C) et ledit point (F), et, d'autre part, la longueur totale dudit rayon respectif (r'), L₀ étant une constante ajustée en fonction du nombre de portions primaires (6) pour que celles-ci ne se chevauchent pas.

14. Procédé de fabrication d'un miroir déformable (1), **caractérisé en ce qu'**il comporte :
- d'une part, au moins une étape de réalisation d'une plaque (2 possédant une face réfléchissante (4) et une face cachée (5) opposée et dont la forme présente un centre (C) et des rayons (r), ladite plaque (2) comprenant une pluralité de portions primaires (6) et secondaires (7), lesdites portions secondaires (7) étant interposées entre lesdites portions primaires (6), chacune desdites portions primaires (6) s'étendant sensiblement localement le long et de part et d'autre d'un rayon respectif (r') parmi lesdits rayons (r) et présentant une raideur différente de celle(s) desdites portions secondaires (7) qui lui sont adjacentes, ladite plaque (2) présentant une tenue mécanique propre, et
- d'autre part, au moins une étape de mise en place d'au moins un actionneur destiné à exercer une force sur ladite face cachée (5) pour déformer ladite plaque (2).

15. Procédé de fabrication d'un miroir déformable (1) selon la revendication précédente, **caractérisé en ce que**, lors de ladite étape de réalisation de ladite plaque (2), on réalise lesdites portions primaires (6) de sorte qu'elles présentent chacune une dimension (L) qui est localement sensiblement transversale audit rayon respectif (r') et parallèle à ladite face réfléchissante (4), et qui varie le long dudit rayon respectif (r').

## Patentansprüche

1. Verformbarer Spiegel (1), der auf einer Seite eine Platte (2), die eine reflektierende Fläche (4) und eine gegenüberliegende verdeckte Fläche (5) hat und deren Form einen Mittelpunkt (C) und Radien (r) aufweist, und auf der anderen Seite mindestens ein Betätigungselement aufweist, das dazu bestimmt ist, eine Kraft auf die verdeckte Fläche (5) auszuüben, um die Platte (2) zu verformen, **dadurch gekennzeichnet, dass** die Platte (2) eine Vielzahl von primären (6) und sekundären (7) Bereichen aufweist, wobei die sekundären Bereiche (7) zwischen den primären Bereichen (6) angeordnet sind, wobei sich jeder der primären Bereiche (6) im Wesentlichen entlang und auf jeder Seite eines zugehörigen Radius (r') unter den Radien (r) räumlich erstreckt und eine Steifigkeit aufweist, die sich von der (den) der daran angrenzenden sekundären Bereiche (7) unterscheidet, wobei die Platte (2) eine eigene mechanische Festigkeit aufweist.

2. Verformbarer Spiegel (1) nach dem vorhergehenden Anspruch, **dadurch gekennzeichnet, dass** die Form der Platte (2) im Wesentlichen kreisförmig oder elliptisch ist.

3. Verformbarer Spiegel (1) nach Anspruch 1 oder 2, **dadurch gekennzeichnet, dass** der primäre Bereich (6) eine Dimension (L) aufweist, die lokal im Wesentlichen quer zu dem jeweiligen Radius (r') und parallel zu der reflektierenden Fläche (4) verläuft und die sich entlang des jeweiligen Radius (r') ändert.

4. Verformbarer Spiegel (1) nach Anspruch 3, **dadurch gekennzeichnet, dass** die Querdimension (L), ausgehend von dem Mittelpunkt (C), nach außen entlang des jeweiligen Radius (r') bis zu einem Hauptpunkt (A) zunimmt, der auf dem jeweiligen Radius (r') und in einem Abstand von dem Mittelpunkt (C) liegt.

5. Verformbarer Spiegel (1) nach dem vorhergehenden Anspruch, **dadurch gekennzeichnet, dass** der Abstand zwischen dem Mittelpunkt (C) und dem Hauptpunkt (A) mindestens 30%, vorzugsweise mindestens 50%, noch bevorzugter mindestens 80%, oder noch bevorzugter die gesamte Länge des jeweiligen Radius (r') beträgt.

6. Verformbarer Spiegel (1) nach einem der Ansprüche 3 bis 5, **dadurch gekennzeichnet, dass** die Querdimension (L), ausgehend von einem peripheren Endpunkt (P) des jeweiligen Radius (r') und/oder einem Rand (3) der Platte (2) in Richtung des Mittelpunkts (C), entlang des jeweiligen Radius (r') bis zu einem sekundären Punkt (B) zunimmt, der auf dem jeweiligen Radius (r') und in einem Abstand von dem peripheren Endpunkt (P) und/oder dem Rand (3) liegt.

7. Verformbarer Spiegel (1) nach dem vorhergehenden Anspruch, **dadurch gekennzeichnet, dass** der Abstand zwischen dem peripheren Endpunkt (P) und/oder dem Rand (3) und dem sekundären Punkt (B) mindestens 30%, weiter bevorzugt mindestens 50% der Länge des jeweiligen Radius (r') beträgt.

8. Verformbarer Spiegel (1) nach Anspruch 4 oder 5 und 6 oder 7, **dadurch gekennzeichnet, dass** der Primärpunkt (A) und der Sekundärpunkt (B) miteinander vertauscht sind.

9. Verformbarer Spiegel (1) nach Anspruch 4 oder 5 und 6 oder 7, **dadurch gekennzeichnet, dass** der Primärpunkt (A) und der Sekundärpunkt (B) nicht miteinander vertauscht sind.

10. Verformbarer Spiegel (1) nach dem vorhergehenden Anspruch, **dadurch gekennzeichnet, dass** die Querdimension (L) entlang des jeweiligen Radius (r') zwischen dem primären (A) und sekundären (B) Punkt im Wesentlichen konstant bleibt.

11. Verformbarer Spiegel (1) nach einem der Ansprüche 3 bis 10, **dadurch gekennzeichnet, dass** die Querdimension (L) entlang des jeweiligen Radius (r') zunimmt und dann abnimmt.

12. Verformbarer Spiegel (1) nach einem der vorhergehenden Ansprüche, **dadurch gekennzeichnet, dass** die primären Bereiche (6) winkelmäßig gleichmäßig um den Mittelpunkt (C) verteilt sind.

13. Verformbarer Spiegel (1) nach einem der vorhergehenden Ansprüche, **dadurch gekennzeichnet, dass** die Querdimension (L), betrachtet an einem Punkt (F) des jeweiligen Radius (r'), die Gleichung erfüllt: L= - L₀*N²*ln(N²), wobei N das Verhältnis zwischen einerseits dem Abstand (CF) zwischen dem Mittelpunkt (C) und dem Punkt (F) und andererseits der Gesamtlänge des jeweiligen Radius (r') ist, wobei L₀ eine Konstante ist, die entsprechend der Anzahl der primären Bereiche (6) gewählt wird, damit sie sich nicht überlappen.

14. Verfahren zur Herstellung eines verformbaren Spiegels (1), **dadurch gekennzeichnet, dass** es umfasst:
- einerseits mindestens einen Schritt der Herstellung einer Platte (2), die eine reflektierende Fläche (4) und eine gegenüberliegende verdeckte Fläche (5) aufweist und deren Form einen Mittelpunkt (C) und Radien (r) besitzt, wobei die Platte (2) eine Vielzahl von primären (6) und sekundären (7) Bereichen aufweist, wobei die sekundären Bereiche (7) zwischen den primären Bereichen (6) angeordnet sind, jeder der primären Abschnitte (6) sich im Wesentlichen lokal entlang und auf jeder Seite eines jeweiligen Radius (r') unter den Radien (r) erstreckt und eine Steifigkeit aufweist, die sich von der (den) der daran angrenzenden sekundären Bereiche (7) unterscheidet, wobei die Platte (2) eine eigene mechanische Festigkeit aufweist, und
- andererseits mindestens einen Schritt des Anbringens mindestens eines Aktuators, der dazu bestimmt ist, eine Kraft auf die verdeckte Fläche (5) auszuüben, um die Platte (2) zu verformen.

15. Verfahren zum Herstellen eines verformbaren Spiegels (1) nach dem vorhergehenden Anspruch, **dadurch gekennzeichnet, dass** während des Schritts des Herstellens der Platte (2) die primären Bereiche (6) so hergestellt werden, dass sie jeweils eine Dimension (L) aufweisen, die räumlich im Wesentlichen quer zu dem jeweiligen Radius (r') und parallel zu der reflektierenden Fläche (4) verläuft und die sich entlang des jeweiligen Radius (r') ändert.

## Claims

1. A deformable mirror (1) including on the one hand a plate (2) having a reflective face (4) and an opposite hidden face (5) and whose shape has a center (C) and radiuses (r), and on the other hand at least one actuator intended to exert a force on said hidden face (5) in order to deform said plate (2), **characterized in that** said plate (2) comprises a plurality of primary (6) and secondary (7) portions, said secondary portions (7) being interposed between said primary portions (6), each of said primary portions (6) extending locally substantially along and on either side of a respective radius (r') among said radiuses (r) and having a stiffness different from that of said adjacent secondary portions (7), said plate (2) presenting an intrinsic mechanical strength.

2. The deformable mirror (1) according to the preceding claim, **characterized in that** said shape of said plate (2) is substantially circular or elliptical.

3. The deformable mirror (1) according to claim 1 or 2, **characterized in that** said primary portion (6) has a dimension (L) which is locally substantially transverse to said respective radius (r') and parallel to said reflective face (4) and which varies along said respective radius (r').

4. The deformable mirror (1) according to claim 3, **characterized in that** said transverse dimension (L) increases, starting from said center (C), outwardly, along said respective radius (r'), up to a primary point (A) located on said respective radius (r') and at a distance from said center (C).

5. The deformable mirror (1) according to the preceding claim, **characterized in that** the distance between said center (C) and said primary point (A) represents at least 30%, preferably at least 50%, still more preferably at least 80%, or still more preferably the entirety of the length of said respective radius (r').

6. The deformable mirror (1) according to any one of claims 3 to 5, **characterized in that** said transverse dimension (L) increases, starting from a peripheral end point (P) of said respective radius (r') and/or from an edge (3) of said plate (2) toward said center (C), along said respective radius (r'), up to a secondary point (B) located on said respective radius (r') and at a distance from said peripheral end point (P) and/or from said edge (3).

7. The deformable mirror (1) according to the preceding claim, **characterized in that** the distance between said peripheral end point (P) and/or said edge (3) and said secondary point (B) represents at least 30%, more preferably at least 50% of the length of said respective radius (r').

8. The deformable mirror (1) according to claims 4 or 5 and 6 or 7, **characterized in that** said primary point (A) and said secondary point (B) are coincident.

9. The deformable mirror (1) according to claims 4 or 5 and 6 or 7, **characterized in that** said primary point (A) and said secondary point (B) are not coincident.

10. The deformable mirror (1) according to the preceding claim, **characterized in that** said transverse dimension (L), along said respective radius (r'), remains substantially constant between said primary (A) and secondary (B) points.

11. The deformable mirror (1) according to any one of claims 3 to 10, **characterized in that** said transverse dimension (L) increases and then decreases along said respective radius (r').

12. The deformable mirror (1) according to any one of the preceding claims, **characterized in that** said primary portions (6) are evenly distributed angularly around said center (C).

13. The deformable mirror (1) according to any one of the preceding claims, **characterized in that** said transverse dimension (L), considered at a point (F) of said respective radius (r'), satisfies the equation: L = -L₀ ∗ N² ∗ ln(N²), where N is the ratio between, on the one hand, the distance (CF) between said center (C) and said point (F), and, on the other hand, the total length of said respective radius (r'), L₀ being a constant adjusted according to the number of primary portions (6) so that the latter do not overlap.

14. A method for manufacturing a deformable mirror (1), **characterized in that** it includes:
- on the one hand, at least one step of making a plate (2) having a reflective face (4) and an opposite hidden face (5) and whose shape has a center (C) and radiuses (r), said plate (2) comprising a plurality of primary (6) and secondary (7) portions, said secondary portions (7) being interposed between said primary portions (6), each of said primary portions (6) extending locally substantially along and on either side of a respective radius (r') among said radiuses (r) and having a stiffness different from that of said adjacent secondary portions (7), said plate (2) presenting an intrinsic mechanical strength, and
- on the other hand, at least one step of setting in place at least one actuator intended to exert a force on said hidden face (5) in order to deform said plate (2).

15. The method for manufacturing a deformable mirror (1) according to the preceding claim, **characterized in that**, during said step of making said plate (2), said primary portions (6) are made such that each of them has a dimension (L) which is locally substantially transverse to said respective radius (r') and parallel to said reflective face (4), and which varies along said respective radius (r').
